(19) **Europäisches Patentamt European Patent Office Office européen des brevets**

(11) **EP 4 712 663 A1**

(12) **EUROPEAN PATENT APPLICATION**
published in accordance with Art. 153(4) EPC

(43) Date of publication:
**18.03.2026 Bulletin 2026/12**

(21) Application number: **24802939.9**

(22) Date of filing: **07.05.2024**

(51) International Patent Classification (IPC):
***H04W 72/53*** (2023.01)

(52) Cooperative Patent Classification (CPC):
**H04W 24/10; H04W 72/121; H04W 72/51; H04W 72/53**

(86) International application number:
**PCT/CN2024/091298**

(87) International publication number:
**WO 2024/230657 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023   CN 202310535558**
**26.09.2023   CN 202311253806**

(71) Applicant: **Vivo Mobile Communication Co., Ltd.**
**Dongguan, Guangdong 523863 (CN)**

(72) Inventors:
• **LIU, Xuanbing**
  **Dongguan, Guangdong 523863 (CN)**
• **YANG, Xiaodong**
  **Dongguan, Guangdong 523863 (CN)**

(74) Representative: **Lavoix**
**Bayerstraße 83**
**80335 München (DE)**

(54) **TRANSMISSION METHOD AND APPARATUS, AND DEVICE AND READABLE STORAGE MEDIUM**

(57)    This application discloses a transmission method and apparatus, a device, and a readable storage medium. The method includes: reporting, by a terminal, MSD information, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

401

A terminal reports MSD information, where the MSD information includes at least one of the following: a first MSD capability, a target MSD value, power class information, band information, bandwidth information, frequency range information, MSD type information, RAT information, or an MSD sequence number

**FIG. 4**

**Description**

**CROSS-REFERENCE TO RELATED APPLICATIONS**

This application claims priorities to Chinese Patent Application No. 202310535558.9 filed on May 11, 2023, and to Chinese Patent Application No. 202311253806.7 filed on September 26, 2023, which are incorporated herein by reference in their entireties.

**TECHNICAL FIELD**

This application relates to the field of communication technologies, and specifically, relates to a transmission method and apparatus, a device, and a readable storage medium.

**BACKGROUND**

Maximum sensitivity degradation (Maximum Sensitivity Degradation, MSD) is maximum sensitivity degradation or a reference sensitivity exception (reference sensitivity exception) specified in a protocol for carrier aggregation (Carrier Aggregation, CA) or dual connectivity (Dual Connectivity, DC). A harmonic (harmonic), harmonic mixing (harmonic mixing), intermodulation (InterModulation, IMD), or cross band isolation interference (cross band isolation interference) may all cause sensitivity degradation of a victim band. For some band combinations, an MSD value may be as high as 30 dB. The MSD is set for a specific uplink (Uplink, UL) or downlink (DownLink, DL) bandwidth and an uplink power level. When a terminal has better MSD than that defined in a specification, if the terminal reports lower MSD, it is helpful for a network to schedule the terminal. Currently, how the terminal reports information related to the MSD is a problem to be urgently resolved.

**SUMMARY**

Embodiments of this application provide a transmission method and apparatus, a device, and a readable storage medium, to resolve a problem of how to report information related to MSD.

In a first aspect, a transmission method is provided, which is performed by a terminal. The method includes: reporting, by the terminal, MSD information, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

According to a second aspect, a transmission method is provided, which is performed a network side device. The method includes:
receiving, by the network side device, MSD information reported by a terminal, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

According to a third aspect, a transmission apparatus is provided, including:
a first sending module, configured to report MSD information, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

According to a fourth aspect, a transmission apparatus is provided, including:
a first receiving module, configured to receive MSD information reported by a terminal, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

According to a fifth aspect, a communication device is provided. The communication device includes a processor, a memory, and a program or instructions stored in the memory and executable on the processor, where the program or the instructions, when executed by the processor, implement steps of the method according to the first aspect or the second aspect.

According to a sixth aspect, a readable storage medium is provided. The readable storage medium stores a program or instructions, where the program or the instructions, when executed by a processor of a terminal, implement steps of the method according to the first aspect, or the program or the instructions, when executed by a network side device, implement steps of the method according to the second aspect.

According to a seventh aspect, a chip is provided, including a processor and a communication interface. The communication interface is coupled to the processor. The processor is configured to execute a program or instructions, to implement steps of the method according to the first aspect or the second aspect.

According to an eighth aspect, a computer program/program product is provided, where the computer program/program product is stored in a non-transitory storage medium, and the computer program/program product is executed by at least one processor, to implement steps of the method according to the first aspect or the second aspect.

According to a ninth aspect, a communication system is provided, including a terminal and a network side device. The terminal is configured to perform steps of the method according to the first aspect, and the network side device is configured to perform steps of the method according to the second aspect.

In the embodiments of this application, the terminal reports the MSD information to the network side device. The MSD information may include at least one of the following: the first MSD capability, the target MSD value, the power class information, the band information, the bandwidth information, the frequency range information, the MSD type information, the RAT information, or the MSD sequence number, so that the terminal can report the information related to the MSD to the network side device, thereby facilitating scheduling of the terminal by a network.

## BRIEF DESCRIPTION OF THE DRAWINGS

FIG. 1 is a schematic diagram of harmonic interference;
FIG. 2 is a schematic diagram of intermodulation interference;
FIG. 3 is a schematic architectural diagram of a wireless communication system according to an embodiment of this application;
FIG. 4 is a flowchart I of a transmission method according to an embodiment of this application;
FIG. 5 is a flowchart II of a transmission method according to an embodiment of this application;
FIG. 6 is a schematic diagram I of a transmission apparatus according to an embodiment of this application;
FIG. 7 is a schematic diagram II of a transmission apparatus according to an embodiment of this application;
FIG. 8 is a schematic diagram of a terminal according to an embodiment of this application;
FIG. 9 is a schematic diagram of a network side device according to an embodiment of this application; and
FIG. 10 is a schematic diagram of a communication device according to an embodiment of this application.

## DETAILED DESCRIPTION

The technical solutions of embodiments of this application are clearly described below with reference to the accompanying drawings in the embodiments of this application. It is clear that, the described embodiments are some rather than all of the embodiments of this application. Based on the embodiments of this application, all other embodiments obtained by a person of ordinary skill in the art fall within the protection scope of this application.

The terms "first", "second", and the like in this application are intended to distinguish between similar objects, but are not intended to describe a specific order or sequence. It should be understood that, the terms used in such a way are exchangeable in a proper case, so that the embodiments of this application can be implemented in another order other than those shown or described herein, and the objects distinguished by "first" and "second" are usually of a same type, and a quantity of objects is not limited. For example, a first object may be one or more. In addition, "or" in the specification represents at least one of connected objects. For example, "A or B" covers three solutions, that is, solution 1: including A and excluding B; solution 2: including B and excluding A; and solution 3: including both A and B. The character "/" generally represents that associated objects in the context are in an "or" relationship.

The term "indication" in this application may be a direct indication (or an explicit indication), or may be an indirect indication (or an implicit indication). The direct indication may be understood as that a transmitter explicitly notifies a receiver of content of a sent indication such as specific information, an operation that needs to be performed, or a request result. The indirect indication may be understood as that a receiver determines corresponding information based on an indication sent by a transmitter, performs determining and determines an operation that needs to be performed or a request result based on a determining result, or the like.

It should be noted that, the technologies described in the embodiments of this application are not limited to a long term evolution (Long Term Evolution, LTE)/LTE-advanced (LTE-Advanced, LTE-A) system, and may be further applied to other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-Carrier Frequency Division Multiple Access, SC-FDMA) system, or other systems. The terms "system" and "network" in this application are usually used interchangeably. The described technologies can be applied to the systems and radio technologies mentioned above, and can also be applied to other systems and radio technologies. The following descriptions describe a new radio (New Radio, NR) system for an example purpose and use NR terminology in most of the following descriptions, although these technologies can also be applied to systems other than NR system applications, such as a 6th generation (6th Generation, 6G) communication system.

For ease of understanding the embodiments of this application, the following technical points are first described below.

(1) For MSD (Maximum Sensitivity Degradation, maximum sensitivity degradation)

The MSD is also referred to as a reference sensitivity exception (reference sensitivity exception).

A product of a radio frequency signal entering a nonlinear device is generally described by using a polynomial as follows:

$$y=f(v)=a0+a1v+a2v^2+a3v^3+a4v^4+a5v^5+\ldots$$

where v is an input signal, and y is an output signal.

Harmonic interference mainly refers to sensitivity interference caused by a transmit (Transmit, TX) harmonic. For example, a TX harmonic of LTE interferes with receive sensitivity of NR, or a TX harmonic of NR interferes with sensitivity of LTE.

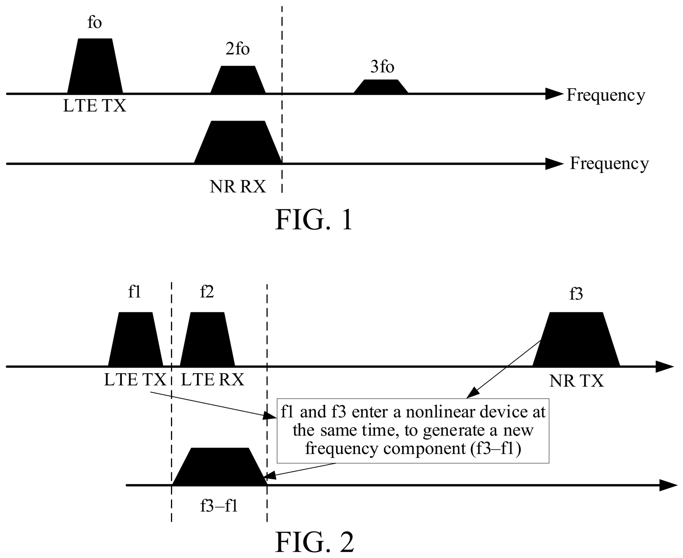

As shown in FIG. 1, when a single-frequency signal cos2πf0t at a frequency of f0 is input, an output signal y includes high-order harmonic components such as 2f0 and 3f0. If a harmonic falls into another receive band, harmonic interference is caused. The interference mostly occurs in a scenario in which low-frequency transmission and high-frequency reception are performed at the same time. Typical scenarios include LTE and 5G dual connectivity (E-UTRAN New Radio Dual Connectivity, EN-DC) such as B3+N78 and B8+N41:

A second harmonic of B3 TX (whose frequency ranges from 1710 MHz to 1785 MHz) interferes with N78 RX (whose frequency ranges from 3300 MHz to 3800 MHz); and

a third harmonic of B8 TX (whose frequency ranges from 880 MHz to 915 MHz) interferes with N41 RX (whose frequency ranges from 2496 MHz to 2690 MHz).

Intermodulation interference (inter modulation distortion interference) mainly refers to sensitivity interference caused by frequency relocation falling into a receive band after two TX frequencies (or frequency multiplication thereof) are multiplied. For example, a TX frequency of LTE B3 and a TX frequency of N78 are multiplied to fall into an LTE B3 RX band, causing a decrease in LTE B3 receive sensitivity, as shown in FIG. 2.

When an input signal includes a plurality of frequency components, intermodulation products of various orders including the frequency components are output. Using an example in which two frequency components cos2πf1t and cos2πf2t are input, an output product may include second-order intermodulation (f1±f2), third-order intermodulation (2f1±f2 and f1±2f2), and the like. If the intermodulation product falls into a receive band, intermodulation interference is caused. Second-order and third-order distortion amplitudes in intermodulation distortion are largest. A higher order indicates a smaller distortion amplitude. Generally, an amplitude of intermodulation distortion higher than the third order is small, impact of which may not be considered in most scenarios. Typical interference scenarios include ENDC B3+N78:

A second-order intermodulation product (fn78-fB3) of B3 TX (whose frequency ranges from 1710 MHz to 1785 MHz) and N78 TX (whose frequency ranges from 3300 MHz to 3800 MHz) interferes with B3 RX (whose frequency ranges from 1805 MHz to 1880 MHz).

(2) For terminal capability

A network initiates a capability transmission process to a terminal in a connected mode, to obtain radio access capability information of the terminal. The terminal sends a terminal capability information (UECapabilityInformation) message to the network after the terminal receives a terminal capability enquiry (UECapabilityEnquiry) message.

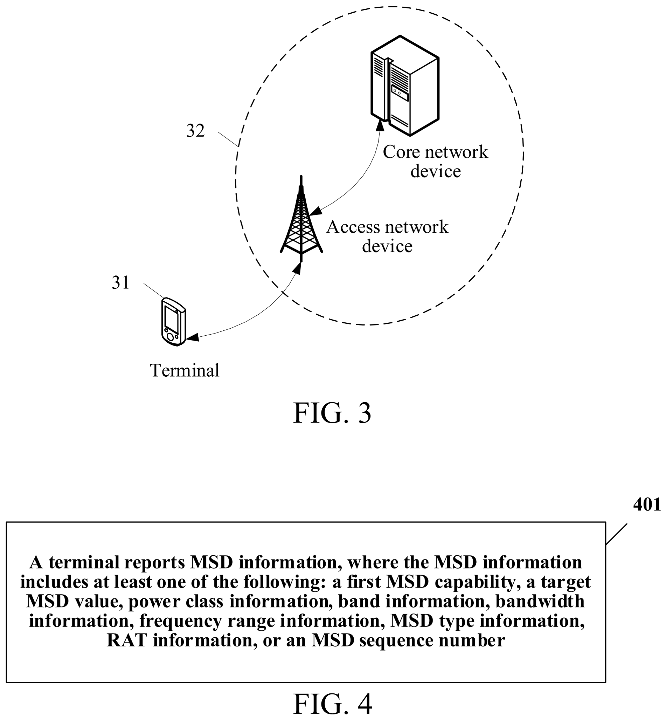

FIG. 3 is a block diagram of a wireless communication system to which an embodiment of this application can be applied. The wireless communication system includes a terminal 31 and a network side device 32. The wireless communication system may be a communication system having a wireless AI function, such as 5G-advanced (5G-Advanced) or 6G.

The terminal 31 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (virtual reality, VR) device, a robot, a wearable device (Wearable Device), a flight vehicle (flight vehicle), a vehicle user equipment (Vehicle User Equipment, VUE), a shipboard device, a pedestrian user equipment (Pedestrian User Equipment, PUE), a smart home appliance (a home device having a wireless communication function, for example, a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. In addition to the above terminal devices, the terminal as referred to in this application may be a chip within a terminal, such as a modem (Modem) chip or a system on chip (System on Chip, SoC). It should be noted that, in the embodiments of this application, a specific type of the terminal 31 is not limited.

The network side device 32 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (Node B, NB), an evolved NodeB (evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (Home Node B, HNB), a home evolved NodeB, a transmission reception point (Transmission Reception Point, TRP), or another appropriate term in the art. Provided that the same technical effects are achieved, the base station is not limited to a specific technology vocabulary. It should be noted that, in the embodiments of this application, only a base station in an NR system is used as an example for description, but a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, only a core network device in the NR system is used as an example, and a specific type of the core network device is not limited.

With reference to the accompanying drawings, the following describes a transmission method and apparatus, a communication device, and a readable storage medium according to the embodiments of this application in detail through some embodiments and application scenarios thereof.

Refer to FIG. 4. An embodiment of this application provides a transmission method, performed by a terminal. A specific step includes step 401.

Step 401: The terminal reports MSD information, where the MSD information includes at least one of the following: a first MSD capability, a target MSD value, power class information, band information, bandwidth information, frequency range information, MSD type information, radio access technology (Radio Access Technology, RAT) information, or an MSD sequence number.

The target MSD value is used for representing MSD that the terminal is capable of supporting or reaching.

The MSD sequence number included in the MSD information may be an MSD sequence number defined by a protocol.

The first MSD capability is used for indicating that the terminal has the target MSD value or a capability for the target MSD value to be lower than an MSD value defined by the protocol. The power class information, the band information, the bandwidth information, or the frequency range information is related to the MSD that the terminal is capable of supporting or reaching. In other words, the power class information, the band information, the bandwidth information, or the frequency range information is information corresponding to the target MSD value.

In an implementation of this application, that the terminal reports MSD information includes:
reporting, by the terminal, the MSD information based on first configuration information or a first reporting manner, where the first configuration information includes at least one of the following: a resource configuration, a defined or configured MSD sequence number, MSD configuration information, or a terminal capability enquiry, and the first reporting manner includes at least one of the following: reporting the MSD information through grouped reporting, reporting the MSD information through segmented reporting, reporting the MSD information through terminal capability information, or reporting the MSD information through a plurality of times of reporting.

The defined or configured MSD sequence number refers to an MSD sequence number that may be defined in a network configuration, or may be defined by the protocol, or may be an MSD sequence number that is configured by a network to need to be reported and is defined based on the protocol.

The grouped reporting refers to reporting at least one MSD information group, and each MSD information group has a same target MSD value. In this way, redundant reporting can be avoided. The segmented reporting refers to segmented reporting of the MSD information, to avoid a problem that signaling of the MSD information is excessively large and is inconvenient for transmission. Therefore, it is convenient for the terminal to send the MSD information through segmented transmission. The plurality of times of reporting refers to reporting the MSD information for a plurality of times based on a band, a power type, an MSD type, or the like, to avoid unnecessary MSD reporting, and avoid a problem that signaling of the MSD information is excessively large and is inconvenient for transmission.

In this embodiment, the terminal reports the target MSD value. The target MSD value is a target MSD value or capability that is lower than MSD defined by the protocol. The terminal may report the MSD information based on the MSD sequence number defined by the protocol. Optionally, the MSD information may include at least one of the following: the MSD sequence number defined by the protocol or the target MSD value. In this way, signaling overheads can be effectively reduced.

In an implementation of this application, the first MSD capability is used for indicating that the terminal has a target MSD capability or a capability for the MSD to be lower than the MSD value defined by the protocol. The MSD defined by the protocol may be maximum sensitivity degradation or a reference sensitivity exception respectively specified for CA or DC in a related protocol.

In an implementation, the first MSD capability is one-bit (bit) information, and the information is used for indicating that the terminal supports a lower MSD value.

In another implementation, the first MSD capability is combined with other additional information, representing that the terminal supports a lower MSD capability on an object indicated by the other additional information. For example, the first MSD capability is combined with the band information, representing that the terminal supports a lower MSD capability in a band or a band combination indicated by the band information.

In an implementation of this application, the target MSD value is used for indicating a target MSD value or capability that is lower than the MSD defined by the protocol.

Optionally, the target MSD value includes at least one of the following:

(1) MSD threshold value

For example, the MSD threshold value may be one of a set of MSD threshold values. When the terminal can reach MSD not greater than the MSD threshold value, the terminal reports the MSD threshold value.

For example, the protocol defines, a network broadcasts, or a network configures a set of MSD threshold values. The set of MSD threshold values include N MSD threshold values {threshold 1, threshold 2, threshold 3, ..., threshold N} dB, where threshold 1=0 dB, threshold 2=1 dB, threshold 3=2 dB, threshold 4=3 dB, threshold 5=5 dB, threshold 6=10 dB, threshold 7=15 dB, threshold 8=20 dB, and threshold 9=25 dB. The MSD threshold value is one of {0, 1, 2, 3, 5, 10, 15, 20, 25}.

In this embodiment, a granularity of the MSD information reported by the terminal may be controlled by using the MSD threshold value, thereby reducing reporting of MSD information of a fine granularity that is not expected by the network.

(2) Threshold number at which the MSD is located (or a threshold identifier in which the MSD is located)

The threshold number at which the MSD is located may be understood as a threshold number corresponding to the MSD threshold value, for example, {1, 2, 3, ..., N}. In comparison with the MSD threshold value, it is beneficial to reduce a quantity of bits required by the MSD information.

(3) Threshold quantity by which the MSD is reduced

For example, the MSD defined by the protocol is 28.4 dB, and the MSD threshold value is {0, 1, 2, 3, 5, 10, 15, 20, 25}. When the target MSD value is 18 dB, a threshold value to be reported by the terminal is 20 dB, a corresponding threshold number is 8, and the threshold quantity by which the MSD is reduced is 2. When the target MSD value is 21 dB, a threshold value to be reported by the terminal is 25 dB, a corresponding threshold number is 9, and the threshold quantity by which the MSD is reduced is 1. In this way, it is beneficial to reduce the quantity of bits required by the MSD information.

In an implementation of this application, the power class (Power Class) information includes at least one of the following:

(1) Default power class

Optionally, the default power class may be agreed in the protocol. For example, the default power class is PC3, that is, 23 dBm.

(2) Power class in which the terminal is located

Optionally, the power class in which the terminal is located may be any one of PC3, PC2, and PC1.5, and certainly, is not limited thereto.

(3) Highest power class or lowest power class supported by the terminal

(4) At least one power class configured by the network

In an implementation of this application, the MSD information does not include the power class information or the power class information in the MSD information is defaulted in a first case. In this way, a signaling load can be reduced.

Optionally, the first case includes at least one the following:

(1) The power class information is the default power class.

Optionally, the default power class may be agreed in the protocol. For example, the default power class is PC3, that is, 23 dBm.

(2) The power class information is the power class in which the terminal is located.

Optionally, the power class in which the terminal is located may be any one of PC3, PC2, or PC1.5.

(3) The power class information is the highest power class or the lowest power class supported by the terminal.

(4) The network configures a power class.

In an implementation of this application, the band information includes at least one of the following:

(1) a victim band (Victim Band);
(2) an aggressor band (Aggressor Band); or
(3) a band combination, where the band combination includes at least one of the victim band or the aggressor band.

The terminal may be interfered with by a plurality of aggressor bands in a same victim band, causing sensitivity degradation. The terminal may be capable of reducing interference of a part of the aggressor bands or interference of all of the aggressor bands. By providing the aggressor band or the victim band for the network by the terminal, it is helpful for the network to configure a band resource for the terminal.

In an implementation of this application, the bandwidth information includes at least one of the following: an aggressor uplink bandwidth or bandwidth part (Bandwidth Part, BWP) or a victim downlink bandwidth or BWP.

The terminal may be interfered with by the aggressor band in a particular bandwidth of the victim band, causing sensitivity degradation. The terminal may be capable of reducing interference of a part of the bandwidths. By providing the bandwidth information for the network by the terminal, it is helpful for the network to configure a bandwidth resource for the terminal. In this embodiment, the terminal may provide the MSD information based on different bandwidths or BWPs, so that the network can configure or activate/deactivate a BWP, facilitating effective scheduling of the terminal by the network.

In an implementation of this application, the frequency range information includes at least one of the following:

(1) aggressor frequency or bandwidth information, for example, a center frequency and bandwidth such as 5 MHz or 10 MHz; or
(2) victim frequency or bandwidth information, for example, a center frequency and bandwidth such as 5 MHz or 10 MHz.

In this embodiment, the terminal provides more accurate frequency range information, facilitating allocation of a resource to the terminal by the network.

In an implementation of this application, when the MSD information does not include the bandwidth information (that is, when the bandwidth information is defaulted or not reported), a bandwidth corresponding to the MSD information is a default bandwidth (Default BWP) or an initial bandwidth (Initial BWP) in a band corresponding to the MSD information, or a maximum bandwidth supported by the terminal in a band corresponding to the MSD information, for example, 10 MHz.

In an implementation of this application, the target MSD value included in the MSD information is a poorest MSD value in all the bandwidths.

In an implementation of this application, the MSD type information is used for indicating an MSD source or a generation cause, and the MSD type information includes at least one of the following:

(1) a harmonic (harmonic), optionally, including a harmonic order;
(2) harmonic mixing (harmonic mixing), optionally, including a harmonic mixing order;
(3) cross band isolation (cross band isolation); or
(4) IMD, optionally, including an IMD order.

Different MSD type information may correspond to different Lower MSD.

Optionally, the terminal does not report the MSD type information, or the MSD type information is defaulted. The target MSD value corresponds to a default MSD type, or maximum Lower MSD in all the MSD types. For example, the MSD defined by the protocol is 28.6 dB, Lower MSD corresponding to a harmonic type is 20 dB, Lower MSD corresponding to the harmonic mixing is 25 dB, and Lower MSD reported by the terminal is 25 dB.

In an implementation of this application, the RAT information includes at least one of the following:

(1) RAT type (RAT Type)
Optionally, the RAT type may be new radio (New Radio, NR) or long term evolution (Long Term Evolution, LTE).
(2) Multi-Radio Dual Connectivity (Multi-RAT Dual Connectivity, MR-DC) information
Optionally, the MR-DC information includes LTE and 5G dual connectivity (E-UTRAN NR--Dual Connectivity, EN-DC), or new radio-dual connectivity (New Radio-Dual Connectivity, NR-DC).
(3) Cell group (Cell Group) information

Optionally, the cell group information includes a master cell group (Master Cell Group, MCG) or a secondary cell group (Secondary Cell Group, SCG).

In this embodiment, the RAT information helps to indicate a RAT or a cell group in which a victim or an aggressor is located, facilitating scheduling of the terminal by the network.

In an implementation of this application, the resource configuration includes at least one of the following:

(1) configured carrier aggregation (Carrier Aggregation, CA) or dual connectivity;
(2) a configured band;
(3) a configured frequency;
(4) a configured bandwidth or BWP, where
for example, the MSD information is reported based on the bandwidth or the BWP, so that the network can activate or use a BWP having the lower MSD; or
(5) a power class of the terminal.

Optionally, the terminal may obtain the resource configuration by using a radio resource control (Radio Resource Control, RRC) reconfiguration message. In this way, after the terminal receives the RRC reconfiguration message, the terminal may report the MSD information.

In an implementation of this application, the MSD configuration information includes at least one of the following:

(1) Allowing the terminal to report the MSD information or not allowing the terminal to report the MSD information

(2) Band configuration

For example, the network requests the terminal to report the MSD information and FreqBands based on the bands (FreqBands). The terminal reports the MSD information in a supported band or a band requested by the network, helping reduce a signaling load.

(3) Bandwidth configuration

In this embodiment, the network requests or configures the terminal to report the MSD information based on the bandwidth.

Optionally, the bandwidth configuration includes a victim bandwidth or an aggressor bandwidth of MSD information that needs to be reported. In this way, it is beneficial to reduce a granularity of the reported MSD information, and it is convenient for the network to schedule the terminal.

(4) Frequency range (Fc+Bandwith)

In this embodiment, it is convenient for the network to schedule the terminal by reporting the frequency range by the terminal.

(5) MSD type allowed to be reported or order corresponding to the MSD type

Optionally, the MSD type allowed to be reported or the order corresponding to the MSD type includes at least one of the following: whether to allow a harmonic or a corresponding order (Harmonic Oder), harmonic mixing or a corresponding order (Harmonic mixing order), and intermodulation or an intermodulation order (IMD order); or an order (Order) range corresponding to the MSD type.

(6) Power class configuration

Optionally, the power class configuration includes at least one of the following: at least one power class that needs to be reported, reporting MSD information based on a current power class capability or not reporting MSD information based on a current power class capability, or reporting MSD information of all power class capabilities or not reporting MSD information of all power class capabilities.

(7) At least one reporting threshold

Optionally, the reporting threshold is configured by the network, controlling a quantity of thresholds or controlling threshold spacing, or the reporting threshold is agreed in the protocol. The terminal reports the MSD information based on the reporting threshold. For example, the reporting threshold may be the MSD threshold value, so that the network can request required MSD information, and filter unrequired MSD information, thereby reducing the signaling overheads.

(8) MSD sequence number that needs to be reported

In this embodiment, the terminal receives the MSD configuration information, and the terminal reports the MSD information based on the MSD configuration information, so that the network can request required MSD information, and filter unrequired MSD information, thereby reducing the signaling overheads.

(9) First band

The first band is used for instructing the terminal to report MSD information corresponding to the first band. For example, the MSD configuration information configures a band1, that is, the terminal is instructed to report MSD information corresponding to the band1.

In an implementation, the first band is an aggressor band (aggressor band). For example, the first band instructs the terminal to report MSD information corresponding to an aggressor band.

It may be understood that the terminal reports only MSD information related to an aggressor band indicated by the network, and filters MSD information related to a non-aggressor band, which does not need to be reported by the terminal, thereby reducing the signaling overheads.

(10) First indication information

The first indication information is used for indicating a first lower MSD class, and the first lower MSD class is used for instructing a terminal whose actual MSD is not higher than maximum allowed actual MSD (Maximum allowed actual MSD) corresponding to the first lower MSD class to report the MSD information.

It should be noted that, reference may be made to the following Table 1 for classification of lower MSD classes.

Table 1 Classification of lower MSD classes (Lower MSD classes)

| Index (Index) | Maximum allowed actual MSD, i.e., a threshold (Maximum allowed actual MSD (i.e., Thresholds)) | Lower MSD capability class (Lower MSD Capability classes) | Note |
|---|---|---|---|
| 0 | 0 dB | I | No degradation (No degradation) |
| 1 | 3 dB | II | Actual MSD (Actual MSD) $\leq$ 3 dB |
| 2 | 6 dB | III | Actual MSD $\leq$ 6 dB |
| 3 | 9 dB | IV | Actual MSD $\leq$ 9 dB |
| 4 | 12 dB | V | Actual MSD $\leq$ 12 dB |
| 5 | 15 dB | VI | Actual MSD $\leq$ 15 dB |
| 6 | 18 dB | VII | Actual MSD $\leq$ 18 dB |
| 7 | 22 dB | VIII | Actual MSD $\leq$ 22 dB |

In an implementation, the first indication information may be an index (index) of a lower MSD class or may be a lower MSD capability class (Lower MSD Capability classes). The first lower MSD class may be indicated by using the first indication information. For example, the first indication information indicates, by using an index index=2, that the first lower MSD class is III, maximum allowed actual MSD corresponding to the first lower MSD class is 6 dB, and when the first indication information indicates that the index of the lower MSD class is 2, a terminal whose actual MSD is not higher than 6 dB reports the MSD information.

In an implementation, the first lower MSD class indicated by the first indication information is a highest lower MSD capability class that can be accepted by the network. For example, for a specific interference scenario (for example, harmonic interference on n78 in n3-n78), according to Table 1, the terminal reports that the index of the lower MSD class of the terminal is 3, that is, Maximum allowed actual MSD (i.e., Thresholds) is 9 dB. However, if the network plans to report a lower MSD capability only for a terminal whose actual MSD is not higher than 3 dB, an index corresponding to actual MSD accepted by the network may be set to 1, that is, maximum allowed actual MSD in this scenario needs to be 3 dB. In this way, although the terminal also supports Lower MSD, because Lower MSD does not reach a network requirement, the terminal also does not need to report the MSD information, thereby reducing reporting overheads. In this way, the network can prevent the terminal from reporting some lower MSD capabilities (MSD information) considered by the network to be invalid, for simplified reporting.

(11) First object and second indication information corresponding to the first object

The second indication information is used for indicating a second lower MSD class, the first object and the second lower MSD class are used for instructing the terminal to report MSD information of a first object whose actual MSD is not higher than second maximum allowed actual MSD, the second maximum allowed actual MSD is maximum allowed actual MSD corresponding to the second lower MSD class, and the first object includes at least one of the following: a second band, a first band combination, a first MSD type, or a first IMD order.

In an implementation, the second indication information may be an index (index) of a lower MSD class or may be a lower MSD capability class (Lower MSD Capability classes). The second lower MSD class may be indicated by using the second indication information. For example, the second indication information indicates, by using an index index=1, that the second lower MSD class is II, and maximum allowed actual MSD corresponding to the second lower MSD class is 3 dB.

In an implementation, the first object and the second indication information corresponding to the first object may be configured on a network side. It may be understood that the first object and the second indication information corresponding to the first object are used for instructing the terminal to report the MSD information of the first object if actual MSD of the first object is not higher than maximum allowed actual MSD corresponding to the first object (the maximum allowed actual MSD corresponding to the first object is the maximum allowed actual MSD corresponding to the second lower MSD class indicated by the second indication information).

In an example, when the first object is the second band, the network may configure a band2 and a lower MSD class corresponding to the band2, for example, configure an index of the lower MSD class corresponding to the band2 as 1 (Maximum allowed actual MSD=3 dB), and/or configure a band3 and a lower MSD class corresponding to the band3, for example, configure an index of the lower MSD class corresponding to the band3 as 2 (Maximum allowed actual MSD=6 dB). If actual MSD of the band2 is not higher than the maximum allowed actual MSD (3 dB) corresponding to the band2, MSD information of the band2 is reported, and if actual MSD of the band3 is not higher than the maximum allowed actual MSD (6 dB) corresponding to the band3, MSD information of the band3 is reported.

In an implementation, the first object may alternatively be the first band combination. If the first object includes the first band combination, and the second indication information is index=1, the first object and the second indication information are used for instructing the terminal to report MSD information corresponding to the first band combination, where actual MSD of the first band combination is not higher than 3 dB.

In an implementation, the first object may be the first MSD type. The first MSD type is one or more of the MSD sources indicated by the MSD type information. For example, the first MSD type may be at least one of the harmonic, the harmonic mixing, or the cross band isolation. If the first MSD type included in the first object is the harmonic, and the second indication information is index=1, the first object and the second indication information are used for instructing the terminal to report MSD information corresponding to the harmonic, where actual MSD of the harmonic is not higher than 3 dB.

In an implementation, the first object may be the first IMD order. If the first object includes the first IMD order, and the second indication information is index=1, the first object and the second indication information are used for instructing the terminal to report MSD information corresponding to the first IMD order, where actual MSD of the first IMD order is not higher than 3 dB. In an implementation, the IMD order is an IMD order of intermodulation interference.

It may be understood that a network side device may configure, based on the band or the band combination, a lower MSD class that is allowed to be reported. Different lower MSD classes that are allowed to be reported may be configured for different bands or band combinations. The lower MSD classes that are allowed to be reported are set for different bands or band combinations. For example, the lower MSD class configured by the terminal for n3-n78 or for the victim band n78 is 3, that is, Maximum allowed actual MSD (i.e., Thresholds) is 9 dB. If the network may set that a highest index class of actual MSD willingly accepted by the network for n3-n78 or for the victim band n78 is 1, or the terminal whose actual MSD is not higher than 3 dB needs to report the lower MSD capability, the terminal does not need to report lower MSD of the n3-n78 band combination or the n78 band. In other words, filtering may be performed based on the lower MSD class and the band or the band combination, to avoid unnecessary reporting of MSD information.

Certainly, the first object may alternatively be a combination of one or more of the second band, the first band combination, the first MSD type, and the first IMD order. For example, if the first object includes the second band and the first MSD type, and the second indication information is index = 1, the first object and the second indication information are used for instructing the terminal to report MSD information corresponding to the second band and the first MSD type, where the MSD information corresponding to the second band and the first MSD type is not higher than 3 dB. In comparison with filtering based on only a single condition like Band or lower MSD power class, more detailed combination filtering is useful in practice. For example, each operator has only a part of a band, and is possibly not affected by all MSD types in the band. For example, there may be a plurality of MSD types in an interfered band, but an operator is affected by only one of the plurality of MSD types. In this way, the network can completely filter the MSD type, and the terminal does not need to report MSD information corresponding to another MSD type.

In another example, the first object may be a combination of the second band and the first MSD type. For example, the band2, an MSD type 1, and lower MSD classes corresponding to the band2 and the MSD type 1 are configured, and for example, an index of the lower MSD classes corresponding to the band2 and the MSD type 1 is configured as 1 (Maximum allowed actual MSD=3 dB); and/or the band3, an MSD type 2, and lower MSD classes corresponding to the band3 and the MSD type 2 are configured, and for example, an index of the lower MSD classes corresponding to the band3 and the MSD type 2 is configured as 2 (Maximum allowed actual MSD=6 dB). If actual MSD of the MSD type 1 in the band2 is not higher than the maximum allowed actual MSD (3 dB) corresponding to the band2 and the MSD type 1, MSD information of the MSD type 1 in the band2 is reported. If actual MSD of the MSD type 2 in the band3 is not higher than the maximum allowed actual MSD (6 dB) corresponding to the band3 and the MSD type 2, MSD information of the MSD type 2 in the band3 is reported.

It should be noted that, for each combination in the first object, refer to the foregoing descriptions and examples for implementation. Details are not described again in this application.

(12) Third indication information

The third indication information is used for indicating whether to report MSD information based on a first test method, where the first test method includes at least one of the following: an OTA test or a conductive test (conductive test). In an implementation, the OTA test refers to testing MSD information including antenna performance (which may be referred to as OTA based MSD (OTA based MSD) or radiated MSD (radiated MSD) by using an OTA (over the air) method. A corresponding lower MSD mechanism may be introduced to the OTA based MSD or the radiated MSD, and the network may configure whether the terminal reports the OTA based MSD or the radiated MSD.

In an implementation, MSD information based on the conductive test may be referred to as conductive MSD (conductive MSD), and the network may configure whether to report the conductive MSD.

In an implementation of this application, the method further includes:

sending, by the terminal, second information before the terminal receives the resource configuration or the MSD configuration information, where the second information is used for indicating that the terminal supports the target MSD value.

In an implementation of this application, the MSD information is carried in a downlink feature set.

In an implementation of this application, the first configuration information includes the terminal capability enquiry, the first reporting manner is reporting the MSD information through the terminal capability information, and the reporting, by the terminal, the MSD information based on first configuration information or a first reporting manner includes: reporting, by the terminal, MSD information related to a band included in a band list filter (frequencyBandListFilter). The band list filter (frequencyBandListFilter) is included in a terminal capability enquiry message.

Optionally, the terminal sends the MSD information to the network side device, and the MSD information is included in the terminal capability information (UECapabilityInformation).

In an implementation, the MSD information is included in the downlink feature set. For example, the MSD information is included in featureSetsDownlinkPerCC. Optionally, the MSD information may include a first MSD capability indication of one bit, or a target MSD value of one or more bits.

Optionally, before the terminal sends the MSD information, the terminal receives an enquiry message sent by the network side device, for example, the terminal capability enquiry (UECapabilityEnquiry) message. The enquiry message may include the MSD configuration information.

For example, the MSD configuration information is a band list filter (frequencyBandListFilter). The MSD configuration information indicates a band in which the MSD information needs or does not need to be reported. In an implementation, the terminal reports the MSD information based on BandNR included in frequencyBandListFilter. The band list filter (frequencyBandListFilter) is included in the terminal capability enquiry message.

For example, the MSD information is reported based on band combination (Band Combination, BC) combination capability information. For example, the MSD information is included in a feature set combination (featureSetCombination), thereby helping reduce the signaling load.

In an implementation of this application, the first reporting manner includes reporting the MSD information through grouped reporting, and the reporting, by the terminal, the MSD information based on a first reporting manner includes:

reporting, by the terminal, at least one MSD information group, where the MSD information group includes at least two pieces of MSD information, and the at least two pieces of MSD information have a same target MSD value.

For example, the terminal may separately optimize some interfered bands, so that a plurality of victim bands or bandwidths, MSD types, or power classes have the same Lower MSD. Some other victim bands or bandwidths, MSD types, or power classes have other same Lower MSD.

In an implementation, the terminal separately reports a first group of MSD information and a second group of MSD information, where:

the first group of MSD information is {Lower MSD value 1; other sets of the MSD information}; and

the second group of MSD information is {Lower MSD value 2; other sets of the MSD information}.

The MSD information may include a plurality of victim bands or bandwidths, MSD types, or power classes.

Considering a case in which the terminal separately optimizes the interfered bands, the terminal may not be capable of reporting one group of MSD information, but needs to report a plurality of groups of MSD information. In this manner, redundant reporting of a same MSD value can be avoided, and signaling overheads can be reduced.

In an implementation of this application, the first reporting manner includes reporting the MSD information through segmented reporting, and the reporting, by the terminal, the MSD information based on a first reporting manner includes:

reporting, by the terminal, the MSD information through an uplink dedicated message segmentation (ULDedicatedMessageSegment) message.

It may be understood that if the MSD information covers all the bands, power classes, MSD types, and the like, signaling of the MSD information may be excessively large, and may be inconvenient for transmission. Signaling overheads may be reduced through segmented transmission, convenient for the terminal to send the MSD information.

In an implementation of this application, the first reporting manner includes reporting the MSD information through the plurality of times of reporting, and the reporting, by the terminal, the MSD information based on a first reporting manner includes:

reporting, by the terminal, first MSD information; and

reporting, by the terminal, second MSD information, where the first MSD information or the second MSD information includes at least a part of content of the MSD information.

Optionally, a granularity of the first MSD information is greater than a granularity of the second MSD information, that is, the first MSD information is coarse-grained MSD information, and the second MSD information is fine-grained MSD information.

For example, if the MSD information covers all the bands, power classes, MSD types, and the like, signaling of the MSD information may be excessively large. In this embodiment, the terminal may report the MSD information for a plurality of times. The terminal first reports the first MSD information (for example, MSD information related to the band, but excluding bandwidth information), to reduce a signaling load. Then, the terminal may report the second MSD information (for example, MSD information related to the band and the bandwidth configured by the network) based on the resource configuration of the network, and provide the related MSD information only for the band or the bandwidth configured by the network, helping reduce signaling.

In the embodiments of this application, the terminal reports the MSD information to the network side device. The MSD information may include at least one of the following: the first MSD capability, the target MSD value, the power class information, the band information, the bandwidth information, the frequency range information, the MSD type information, the RAT information, or the MSD sequence number, helping reduce the signaling load for reporting the MSD information, and convenient for the network to schedule the terminal.

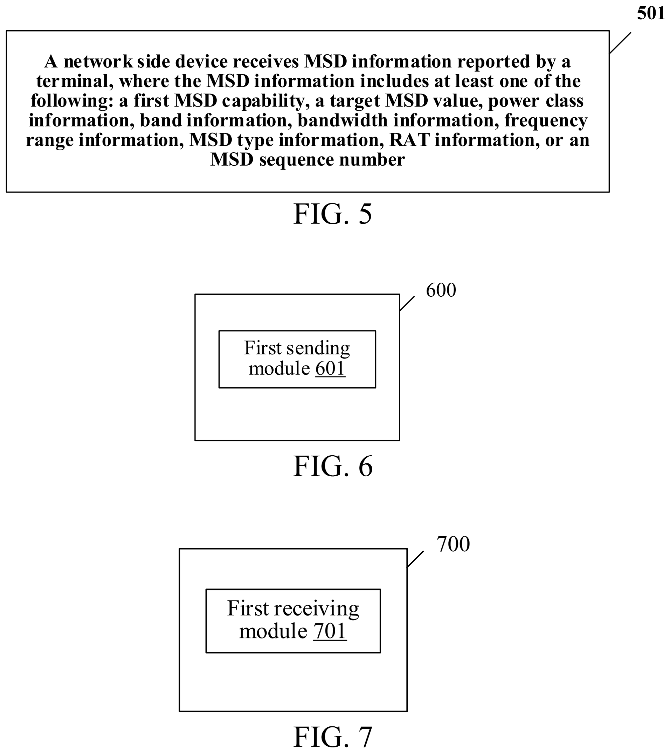

Refer to FIG. 5. This embodiment provides a transmission method, performed by a network side device. A specific step includes step 501.

Step 501: The network side device receives MSD information reported by a terminal, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

In an implementation of this application, the method further includes:

sending, by the network side device, first configuration information, where the first configuration information includes at least one of the following: a resource configuration, a defined or configured MSD sequence number, MSD configuration information, or a terminal capability enquiry.

In an implementation of this application, that the network side device receives MSD information reported by a terminal includes:

receiving, by the network side device, the MSD information sent by the terminal in a first reporting manner, where the first reporting manner includes at least one of the following: reporting the MSD information through grouped reporting, reporting the MSD information through segmented reporting, reporting the MSD information through terminal capability information, or reporting the MSD information through a plurality of times of reporting.

In an implementation of this application, the target MSD value includes at least one of the following: an MSD threshold value, a threshold number at which the MSD is located, and a threshold quantity by which the MSD is reduced.

In an implementation of this application, the power class information includes at least one of the following: a default power class, a power class in which the terminal is located, a highest power class or a lowest power class supported by the terminal, or at least one power class configured by a network.

In an implementation of this application, the MSD information does not include the power class information or the power class information in the MSD information is defaulted in a first case.

The first case includes at least one of the following: the power class information being the default power class, the power class information being the power class in which the terminal is located, the power class information being the highest power class or the lowest power class supported by the terminal, or the network configuring a power class.

In an implementation of this application, the band information includes at least one of the following: a victim band, an aggressor band, or a band combination, where the band combination includes at least one of the victim band or the aggressor band.

In an implementation of this application, the bandwidth information includes at least one of the following: an aggressor uplink bandwidth or BWP, or a victim downlink bandwidth or BWP.

In an implementation of this application, the frequency range information includes at least one of the following: an aggressor frequency or bandwidth information, or a victim frequency or bandwidth information.

In an implementation of this application, when the MSD information does not include the bandwidth information, a bandwidth corresponding to the MSD information is a default bandwidth in a corresponding band, or an initial bandwidth, or a maximum bandwidth supported by the terminal in a corresponding band.

In an implementation of this application, the RAT information includes at least one of the following: a RAT type, MR-DC information, or cell group information.

In an implementation of this application, the method further includes:

receiving, by the network side device, second information sent by the terminal, where the second information is used for indicating that the terminal supports the target MSD value.

In an implementation of this application, the MSD information is carried in a downlink feature set.

In an implementation of this application, the method further includes:

storing, by the network side device, the MSD information in the terminal capability (UE Capability) information or terminal context (UE Context) information.

In this embodiment of this application, the network side device receives the MSD information reported by the terminal. The MSD information may include at least one of the following: the first MSD capability, the target MSD value, the power class information, the band information, the bandwidth information, the frequency range information, the MSD type information, the RAT information, or the MSD sequence number. This helps reduce a signaling load for reporting MSD capability information, and is convenient for the network to schedule the terminal.

In an implementation, the MSD configuration information includes at least one of the following: allowing the terminal to report the MSD information or not allowing the terminal to report the MSD information, a band configuration, a bandwidth configuration, a frequency range, an MSD type allowed to be reported or an order corresponding to the MSD type, a power class configuration, at least one reporting threshold, an MSD sequence number that needs to be reported, a first band, first indication information, a first object, second indication information corresponding to the first object, or third indication information, where

the first band is used for instructing the terminal to report MSD information corresponding to the first band;

the first indication information is used for indicating a first lower MSD class, and the first lower MSD class is used for instructing a terminal whose actual MSD is not higher than maximum allowed actual MSD corresponding to the first lower MSD class to report the MSD information;

the second indication information is used for indicating a second lower MSD class, the first object and the second lower MSD class are used for instructing the terminal to report MSD information of a first object whose actual MSD is not higher than second maximum allowed actual MSD, the second maximum allowed actual MSD is maximum allowed actual MSD corresponding to the second lower MSD class, and the first object includes at least one of the following: a second band, a first band combination, a first MSD type, or a first IMD order; and

the third indication information is used for indicating whether to report MSD information based on a first test method, where the first test method includes at least one of the following: an OTA test or a conductive test.

For details of each item included in the MSD configuration information, refer to the descriptions in the embodiment of the terminal side. Details are not described herein again.

In an implementation, the network side device is a master node MN, and that the network side device receives MSD information reported by a terminal includes: receiving, by the MN, MSD information of the first band combination that is reported by the terminal.

The method further includes:

sending, by the MN, the MSD information of the first band combination (band combination, BC) to a secondary node SN, where the first band combination includes a combination of a third band and another band, and the third band is a band related to the SN; or

sending, by the MN, the MSD information of the first band combination to a core network device, where the first band combination includes a combination of a third band and another band, and the third band is a band related to the SN.

In an implementation, the band related to the SN may be a band used by the SN or a band possibly used by the SN.

In an implementation, the MSD information of the first band combination includes capability information useful for the SN.

In an implementation, the sending, by the MN, the MSD information of the first band combination to a secondary node SN includes: sending, by the MN, the MSD information of the first band combination to the SN when adding the SN.

In an implementation, after the sending, by the MN, the MSD information of the first band combination to a core network device, the method further includes:

obtaining, by the SN, the MSD information of the first band combination from the core network device.

In an implementation, the obtaining, by the SN, the MSD information of the first band combination from the core network device includes: obtaining, by the SN, the MSD information of the first band combination from the core network device after the SN receives an SN addition request sent by the MN.

An embodiment of this application provides a system. The system includes an MN and an SN. For an operation performed by the MN, refer to the operation performed by the network side device in the embodiment corresponding to FIG. 5. Details are not described herein again. The SN is configured to obtain MSD information of a first band combination from a core network device. That the SN is configured to obtain MSD information of a first band combination from a core network device includes: obtaining, by the SN, the MSD information of the first band combination from the core network device after the SN receives an SN addition request sent by the MN.

Refer to FIG. 6. An embodiment of this application provides a transmission apparatus, used in a terminal. The apparatus 600 includes:

a first sending module 601, configured to report MSD information, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

In an implementation of this application, the first sending module 501 is further configured to:

report the MSD information based on first configuration information or a first reporting manner, where the first configuration information includes at least one of the following: a resource configuration, a defined or configured MSD sequence number, MSD configuration information, or a terminal capability enquiry, and the first reporting manner includes at least one of the following: reporting the MSD information through grouped reporting, reporting the MSD information through segmented reporting, reporting the MSD information through terminal capability information, or reporting the MSD information through a plurality of times of reporting.

The first MSD capability is used for indicating that the terminal has the target MSD capability or the capability that has lower MSD than the MSD value defined by the protocol. The MSD defined by the protocol may be maximum sensitivity degradation or a reference sensitivity exception respectively specified for CA or DC in a related protocol.

Optionally, the target MSD value includes at least one of the following:

(1) an MSD threshold value;
(2) a threshold number at which the MSD is located; or
(3) a threshold quantity by which the MSD is reduced.

In an implementation of this application, the power class information includes at least one of the following:

(1) a default power class;
(2) a power class in which the terminal is located;
(3) a highest power class or a lowest power class supported by the terminal; or
(4) at least one power class configured by a network.

In an implementation of this application, the MSD information does not include the power class information or the power class information in the MSD information is defaulted in a first case. In this way, a signaling load can be reduced.

Optionally, the first case includes at least one the following:

(1) the power class information is the default power class;
(2) the power class information is the power class in which the terminal is located;
(3) the power class information is the highest power class or the lowest power class supported by the terminal; or
(4) the network configures a power class.

In an implementation of this application, the band information includes at least one of the following:

(1) a victim band;
(2) an aggressor band; or
(3) a band combination, where the band combination includes at least one of the victim band or the aggressor band.

In an implementation of this application, the bandwidth information includes at least one of the following: an aggressor uplink bandwidth or BWP, or a victim downlink bandwidth or BWP.

In this embodiment, the terminal may provide MSD information based on different bandwidths or BWPs, so that the network can configure or activate/deactivate a BWP, facilitating effective scheduling on the terminal.

In an implementation of this application, the frequency range information includes at least one of the following:

(1) aggressor frequency or bandwidth information; or

(2) victim frequency or bandwidth information.

In this embodiment, the terminal provides more accurate frequency range information, helping the network allocate a resource to the terminal.

In an implementation of this application, when the MSD information does not include the bandwidth information (that is, when the bandwidth information is defaulted or not reported), a bandwidth corresponding to the MSD information is a default bandwidth (Default BWP) or an initial bandwidth (Initial BWP) in a band corresponding to the MSD information, or a maximum bandwidth supported by the terminal in a band corresponding to the MSD information, for example, 10 HMz.

In an implementation of this application, the target MSD value included in the MSD information is a poorest MSD value in all the bandwidths.

In an implementation of this application, the MSD type information includes at least one of the following:

(1) a harmonic;

(2) harmonic mixing;

(3) cross band isolation; or

(4) IMD.

In an implementation of this application, the RAT information includes at least one of the following:

(1) a RAT type;

Optionally, the RAT type may be new radio or long term evolution.

(2) MR-DC information; or

(3) cell group information.

In this embodiment, the RAT information helps to indicate a RAT or a cell group in which a victim or an aggressor is located, to facilitate scheduling by a network.

In an implementation of this application, the resource configuration includes at least one of the following:

(1) configured CA or dual connectivity;

(2) a configured band;

(3) a configured frequency;

(4) a configured bandwidth or BWP; or

(5) a power class of the terminal.

In an implementation of this application, the MSD configuration information includes at least one of the following:

(1) Allowing the terminal to report the MSD information or not allowing the terminal to report the MSD information

(2) Band configuration

(3) Bandwidth configuration

Optionally, the bandwidth configuration includes a victim bandwidth or an aggressor bandwidth of MSD information that needs to be reported. In this way, it is beneficial to reduce a granularity of the reported MSD information, thereby facilitating scheduling by the network.

(4) Frequency range

In this embodiment, reporting the frequency range by the terminal facilitates scheduling by the network.

(5) MSD type allowed to be reported or order corresponding to the MSD type

(6) Power class configuration

Optionally, the power class configuration includes at least one of the following: at least one power class that needs to be reported, reporting MSD information based on a current power class capability or not reporting MSD information based on a current power class capability, or reporting MSD information of all power class capabilities or not reporting MSD information of all power class capabilities.

(7) At least one reporting threshold

(8) MSD sequence number that needs to be reported

(9) First band

The first band is used for instructing the terminal to report MSD information corresponding to the first band.

In an implementation, the first band is an aggressor band.

(10) First indication information

The first indication information is used for indicating a first lower MSD class, and the first lower MSD class is used for instructing a terminal whose actual MSD is not higher than maximum allowed actual MSD corresponding to the first lower MSD class to report the MSD information;

(11) First object and second indication information corresponding to the first object

The second indication information is used for indicating a second lower MSD class, the first object and the second lower MSD class are used for instructing the terminal to report MSD information of a first object whose actual MSD is not higher than second maximum allowed actual MSD, the second maximum allowed actual MSD is maximum allowed actual MSD corresponding to the second lower MSD class, and the first object includes at least one of the following: a second band, a first band combination, a first MSD type, or a first IMD order.

(12) Third indication information

The third indication information is used for indicating whether to report MSD information based on a first test method, where the first test method includes at least one of the following: an OTA test or a conductive test.

In an implementation of this application, the apparatus further includes:
a second sending module, configured to send second information before the terminal receives the resource configuration or the MSD configuration information, where the second information is used for indicating that the terminal supports the target MSD value.

In an implementation of this application, the MSD information is carried in a downlink feature set.

In an implementation of this application, the first sending module 601 is further configured to report MSD information related to a band included in a band list filter.

In an implementation of this application, the first reporting manner includes reporting the MSD information through grouped reporting, and the first sending module 601 is further configured to report at least one MSD information group, where the MSD information group includes at least two pieces of MSD information, and the at least two pieces of MSD information have a same target MSD value.

In an implementation of this application, the first sending module 601 is further configured to report the MSD information through an uplink dedicated message segmentation message.

In an implementation of this application, the first sending module 601 is further configured to: report first MSD information; and report second MSD information, where the first MSD information or the second MSD information includes at least a part of content of the MSD information.

The apparatus provided in this embodiment of this application can implement the processes implemented in the method embodiment of FIG. 3, and achieve a same technical effect. To avoid repetition, details are not described herein again.

Refer to FIG. 7. This embodiment provides a transmission apparatus, used in a network side device. The apparatus 700 includes:
a first receiving module 701, configured to receive MSD information reported by a terminal, where the MSD information includes at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

In an implementation of this application, the apparatus further includes:
a third sending module, configured to send first configuration information, where the first configuration information includes at least one of the following: a resource configuration, a defined or configured MSD sequence number, MSD configuration information, or a terminal capability enquiry.

In an implementation of this application, the first receiving module 701 is further configured to receive the MSD information sent by the terminal in a first reporting manner, where the first reporting manner includes at least one of the following: reporting the MSD information through grouped reporting, reporting the MSD information through segmented reporting, reporting the MSD information through terminal capability information, or reporting the MSD information through a plurality of times of reporting.

In an implementation of this application, the target MSD value includes at least one of the following: an MSD threshold value, a threshold number at which the MSD is located, and a threshold quantity by which the MSD is reduced.

In an implementation of this application, the power class information includes at least one of the following: a default power class, a power class in which the terminal is located, a highest power class or a lowest power class supported by the terminal, or at least one power class configured by a network.

In an implementation of this application, the MSD information does not include the power class information or the power class information in the MSD information is defaulted in a first case.

The first case includes at least one of the following: the power class information being the default power class, the power class information being the power class in which the terminal is located, the power class information being the highest power class or the lowest power class supported by the terminal, or the network configuring a power class.

In an implementation of this application, the band information includes at least one of the following: a victim band, an aggressor band, or a band combination, where the band combination includes at least one of the victim band or the aggressor band.

In an implementation of this application, the bandwidth information includes at least one of the following: an aggressor uplink bandwidth or BWP, or a victim downlink bandwidth or BWP.

In an implementation of this application, the frequency range information includes at least one of the following: an aggressor frequency or bandwidth information, or a victim frequency or bandwidth information.

In an implementation of this application, when the MSD information does not include the bandwidth information, a bandwidth corresponding to the MSD information is a default bandwidth in a corresponding band, or an initial bandwidth, or a maximum bandwidth supported by the terminal in a corresponding band.

In an implementation of this application, the RAT information includes at least one of the following: a RAT type, MR-DC information, or cell group information.

In an implementation of this application, the apparatus further includes:

receiving, by the network side device, second information sent by the terminal, where the second information is used for indicating that the terminal supports the target MSD value.

In an implementation of this application, the MSD information is carried in a downlink feature set.

In an implementation of this application, the apparatus further includes:

a storage module, configured to store the MSD information in the terminal capability information or terminal context information.

In an implementation of this application, the MSD configuration information includes at least one of the following:

(1) Allowing the terminal to report the MSD information or not allowing the terminal to report the MSD information
(2) Band configuration
(3) Bandwidth configuration

Optionally, the bandwidth configuration includes a victim bandwidth or an aggressor bandwidth of MSD information that needs to be reported. In this way, it is beneficial to reduce a granularity of the reported MSD information, thereby facilitating scheduling by a network.

(4) Frequency range

In this embodiment, reporting the frequency range by the terminal facilitates scheduling by the network.

(5) MSD type allowed to be reported or order corresponding to the MSD type
(6) Power class configuration

Optionally, the power class configuration includes at least one of the following: at least one power class that needs to be reported, reporting MSD information based on a current power class capability or not reporting MSD information based on a current power class capability, or reporting MSD information of all power class capabilities or not reporting MSD information of all power class capabilities.

(7) At least one reporting threshold
(8) MSD sequence number that needs to be reported
(9) First band

The first band is used for instructing the terminal to report MSD information corresponding to the first band.

In an implementation, the first band is an aggressor band.

(10) First indication information

The first indication information is used for indicating a first lower MSD class, and the first lower MSD class is used for instructing a terminal whose actual MSD is not higher than maximum allowed actual MSD corresponding to the first lower MSD class to report the MSD information;

(11) First object and second indication information corresponding to the first object

The second indication information is used for indicating a second lower MSD class, the first object and the second lower MSD class are used for instructing the terminal to report MSD information of a first object whose actual MSD is not higher than second maximum allowed actual MSD, the second maximum allowed actual MSD is maximum allowed actual MSD corresponding to the second lower MSD class, and the first object includes at least one of the following: a second band, a first band combination, a first MSD type, or a first IMD order.

(12) Third indication information

The third indication information is used for indicating whether to report MSD information based on a first test method, where the first test method includes at least one of the following: an OTA test or a conductive test.

When the network side device is an MN, the first receiving module 701 is specifically configured to receive MSD information of the first band combination reported by the terminal.

The apparatus 700 further includes a fourth sending module. The fourth sending module is configured to send the MSD information of the first band combination to a secondary node SN. The first band combination includes a combination of a third band and another band, and the third band is a band related to the SN;

or

the fourth sending module is configured to send the MSD information of the first band combination to a core network device, where the first band combination includes a combination of a third band and another band, and the third band is a band related to the SN.

The apparatus provided in this embodiment of this application can implement the processes implemented in the method embodiment of FIG. 5, and achieve a same technical effect. To avoid repetition, details are not described herein again.

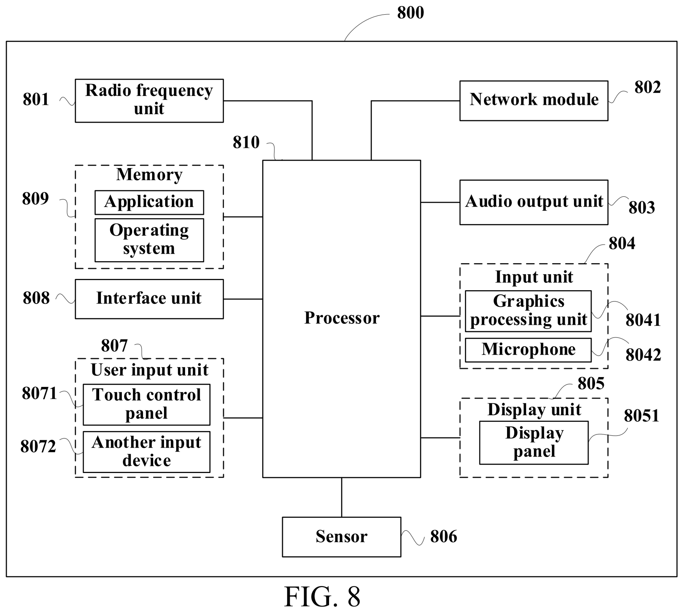

FIG. 8 is a schematic diagram of a hardware structure of a terminal according to an embodiment of this application. The terminal 800 includes, but is not limited to, at least a part of components of a radio frequency unit 801, a network module 802, an audio output unit 803, an input unit 804, a sensor 805, a display unit 806, a user input unit 807, an interface unit 808, a memory 809, a processor 810, and the like.

A person skilled in the art may understand that the terminal 800 may further include a power supply (for example, a battery) for supplying power to the components. The power supply may be logically connected to the processor 810 through a power management system, thereby implementing functions such as charging, discharging, and power consumption management by using the power management system. The terminal structure shown in FIG. 8 constitutes no limitation on the terminal. The terminal may include more or fewer components than those shown in the figure, some component combinations, or different component arrangements. Details are not described herein again.

It should be understood that, in this embodiment of this application, the input unit 804 may include a graphics processing unit (Graphics Processing Unit, GPU) 8041 and a microphone 8042. The graphics processing unit 8041 performs processing on image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode, or the like. The user input unit 807 includes at least one of a touch control panel 8031 or another input device 8032. The touch control panel 8031 is also referred to as a touchscreen. The touch control panel 8031 may include a touch detection apparatus and a touch controller. The another input device 8032 may include, but is not limited to, a physical keyboard, a function key (such as a volume control key or an on/off key), a trackball, a mouse, and a joystick. Details are not described herein again.

In this embodiment of this application, the radio frequency unit 801 receives downlink data from a network side device, and then may transmit the data to the processor 810 for processing. In addition, the radio frequency unit 801 may send uplink data to the network side device. Generally, the radio frequency unit 801 includes, but is not limited to, an antenna, an amplifier, a transceiver, a coupler, a low noise amplifier, a duplexer, and the like.

The memory 809 may be configured to store a software program or instructions, and various data. The memory 809 may mainly include a first storage area storing a program or instructions and a second storage area storing data. The first storage area may store an operating system, an application program or instructions required by at least one function (such as a sound playback function or an image display function), and the like. Furthermore, the memory 809 may include a volatile memory or a non-volatile memory, or the memory 809 may include a non-transitory memory. The non-volatile memory or the non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in this embodiment of this application includes, but is not limited to, these memories and any other suitable types of memories.

The processor 810 may include one or more processing units. Optionally, the processor 810 integrates an application processor and a modem processor, where the application processor mainly processes an operation involving the operating system, the user interface, the application program, and the like, and the modem processor mainly processes a wireless communication signal, for example, a baseband processor. It may be understood that the modem processor may not be integrated into the processor 810.

The terminal provided in this embodiment of this application can implement the processes implemented in the method embodiment of FIG. 4, and achieve a same technical effect. To avoid repetition, details are not described herein again.

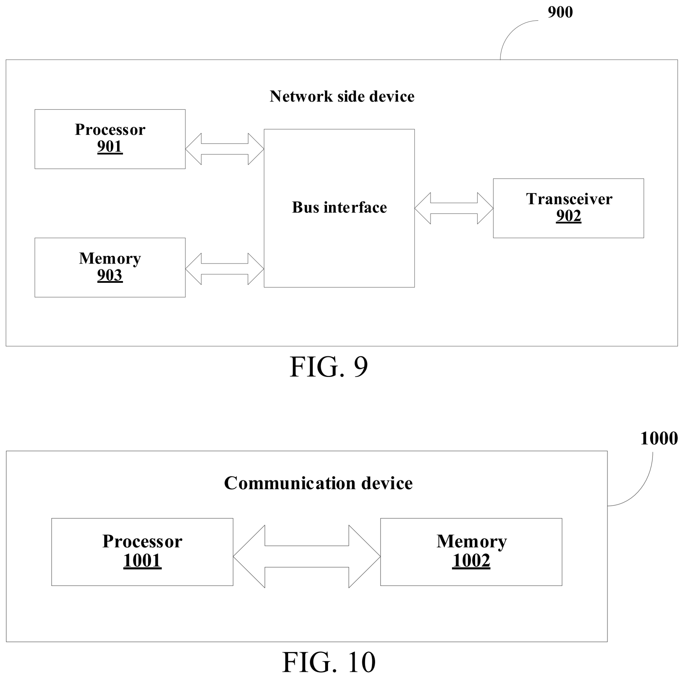

Refer to FIG. 9. FIG. 9 is a structural diagram of a network side device to which an embodiment of this application is applied. As shown in FIG. 9, a communication device 900 includes: a processor 901, a transceiver 902, a memory 903, and a bus interface. The processor 901 may be responsible for managing a bus architecture and general processing. The memory 903 may store data used by the processor 901 when the processor performs an operation.

In an embodiment of this application, the communication device 900 further includes a program stored in the memory 903 and executable on the processor 901. When the program is executed by the processor 901, steps of the foregoing method in FIG. 5 are implemented.

In FIG. 9, the bus architecture may include any quantity of interconnected buses and bridges. Specifically, one or more processors represented by the processor 901 are linked to various circuits of a memory represented by the memory 903. The bus architecture may further link various other circuits together such as a peripheral device, a voltage regulator, and a power management circuit. These are well known in the art, and therefore are not further described herein. The bus interface provides an interface. The transceiver 902 may be a plurality of elements, including a transmitter and a receiver, and providing units for communicating with various other apparatuses on a transmission medium.

As shown in FIG. 10, an embodiment of this application further provides a communication device 1000, including a processor 1001 and a memory 1002. The memory 1002 stores a program or instructions executable on the processor 1001. For example, when the communication device 1000 is a terminal, the program or the instructions are executed by the processor 1001 to implement the steps of the method embodiment in FIG. 4. When the communication device 1000 is a network side device, the program or the instructions are executed by the processor 1001 to implement the steps of the method embodiment in FIG. 5, and a same technical effect can be achieved. To avoid repetition, details are not described herein again.

An embodiment of this application further provides a readable storage medium. The readable storage medium stores a program or instructions, and when the program or the instructions are executed by a processor, the processes in the method in FIG. 4 or FIG. 5 and the foregoing embodiments are implemented, and a same technical effect can be achieved. To avoid repetition, details are not described herein again.

The processor is the processor in the terminal in the embodiments described above. The readable storage medium includes a computer-readable storage medium, such as a computer read-only memory ROM, a random access memory RAM, a magnetic disk, an optical disc, or the like. In some examples, the readable storage medium may be a non-transitory readable storage medium.

An embodiment of this application further provides a chip. The chip includes a processor and a communication interface, the communication interface is coupled to the processor, and the processor is configured to run a program or instructions to implement the processes shown in FIG. 4 or FIG. 5 and the foregoing method embodiments, and a same technical effect can be achieved. To avoid repetition, details are not described herein again.

It should be understood that the chip in this embodiment of this application may also be referred to as a system level chip, a system chip, a chip system, a system-on-chip, or the like.

An embodiment of this application also provides a computer program/program product. The computer program/program product is stored in a storage medium, the computer program/program product is executed by at least one processor to implement the processes shown in FIG. 4 or FIG. 5 and the foregoing method embodiments, and a same technical effect can be achieved. To avoid repetition, details are not described herein again.

An embodiment of this application further provides a communication system, where the communication system includes a terminal and a network side device. The terminal is configured to perform the processes in FIG. 3 and the foregoing method embodiments, the network side device is configured to perform the processes in FIG. 4 and the foregoing method embodiments, and a same technical effect can be achieved. To avoid repetition, details are not described herein again.

It should be noted that, the terms "include", "comprise", or any other variation thereof in this specification are intended to cover a non-exclusive inclusion, such that a process, method, article, or apparatus that includes a list of elements not only includes those elements but also includes other elements not expressly listed or inherent to the process, method, article, or apparatus. Without more limitations, an element defined by a sentence "including one" does not exclude a case that there are still other same elements in the process, method, article, or apparatus that includes the element. Further, it should be noted that the scope of the methods and apparatuses in embodiments of this application is not limited to performing functions in the order shown or discussed, but may further include performing functions in a substantially simultaneous manner or in reverse order depending on the functions involved, for example, the described methods may be performed in a different order than described, and various steps may be added, omitted, or combined. In addition, features described with reference to some examples can be combined in other examples.

Through the foregoing descriptions of the implementations, a person skilled in the art can clearly learn that the foregoing embodiment methods may be implemented by using a computer software product in combination with a necessary universal hardware platform, or may certainly be implemented by hardware. The computer software product is stored in a storage medium (such as a ROM, a RAM, a magnetic disk, or an optical disk), including several instructions to enable a terminal or network side device to perform the methods according to the embodiments of this application.

Embodiments of this application are described with reference to the accompanying drawings. This application is not limited to the specific implementations described above, and the specific implementations described above are merely examples and not limited. A person of ordinary skill in the art may also make various forms of implementations under the inspiration of this application and without departing from the purpose of this application and the protection scope of the claims, and such implementations shall all fall within the protection scope of this application.

## Claims

1. A transmission method, comprising:

   reporting, by a terminal, maximum sensitivity degradation MSD information, wherein the MSD information comprises at least one of the following: a first MSD capability, a target MSD value, power class information, band information, bandwidth information, frequency range information, MSD type information, radio access technology RAT information, or an MSD sequence number, wherein
   the first MSD capability is used for indicating that the terminal has a capability of the target MSD value or a capability of the target MSD value which is lower than the MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

2. The method according to claim 1, wherein the reporting, by a terminal, MSD information comprises:
   reporting, by the terminal, the MSD information based on first configuration information or a first reporting manner, wherein the first configuration information comprises at least one of the following: a resource configuration, a defined or configured MSD sequence number, MSD configuration information, or a terminal capability enquiry, and the first reporting manner comprises at least one of the following: reporting the MSD information through grouped reporting, reporting the MSD information through segmented reporting, reporting the MSD information through terminal capability information, or reporting the MSD information through a plurality of times of reporting.

3. The method according to claim 1, wherein the target MSD value comprises at least one of the following: an MSD threshold value, a threshold number at which the MSD is located, and a threshold quantity by which the MSD is reduced.

4. The method according to claim 1, wherein the power class information comprises at least one of the following: a default power class, a power class in which the terminal is located, a highest power class or a lowest power class supported by the terminal, or at least one power class configured by a network.

5. The method according to claim 4, wherein the MSD information does not comprise the power class information or the power class information in the MSD information is defaulted in a first case, wherein
the first case comprises at least one of the following: the power class information being the default power class, the power class information being the power class in which the terminal is located, the power class information being the highest power class or the lowest power class supported by the terminal, or the network configuring a power class.

6. The method according to claim 1, wherein the band information comprises at least one of the following: a victim band, an aggressor band, or a band combination, wherein the band combination comprises at least one of the victim band or the aggressor band.

7. The method according to claim 1, wherein the bandwidth information comprises at least one of the following: an aggressor uplink bandwidth or bandwidth part BWP, or a victim downlink bandwidth or BWP.

8. The method according to claim 1, wherein the frequency range information comprises at least one of the following: aggressor frequency or bandwidth information, or victim frequency or bandwidth information.

9. The method according to claim 1, wherein in a case that the MSD information does not comprise the bandwidth information, a bandwidth corresponding to the MSD information is a default bandwidth in a band corresponding to the MSD information, or an initial bandwidth, or a maximum bandwidth supported by the terminal in a band corresponding to the MSD information; or the target MSD value comprised in the MSD information is a poorest MSD value in all bandwidths.

10. The method according to claim 1, wherein the RAT information comprises at least one of the following: a RAT type, Multi-Radio Dual Connectivity MR-DC information, or cell group information.

11. The method according to claim 2, wherein the resource configuration comprises at least one of the following: configured carrier aggregation or dual connectivity, a configured band, a configured frequency, a configured bandwidth or BWP, or a power class of the terminal.

12. The method according to claim 2, wherein the MSD configuration information comprises at least one of the following: allowing the terminal to report the MSD information or not allowing the terminal to report the MSD information, a band configuration, a bandwidth configuration, a frequency range, an MSD type allowed to be reported or an order corresponding to the MSD type, a power class configuration, at least one reporting threshold, an MSD sequence number that needs to be reported, a first band, first indication information, a first object, second indication information corresponding to the first object, or third indication information, wherein

the first band is used for instructing the terminal to report MSD information corresponding to the first band;
the first indication information is used for indicating a first lower MSD class, and the first lower MSD class is used for instructing a terminal whose actual MSD is not higher than maximum allowed actual MSD corresponding to the first lower MSD class to report the MSD information;
the second indication information is used for indicating a second lower MSD class, the first object and the second lower MSD class are used for instructing the terminal to report MSD information of a first object whose actual MSD is not higher than second maximum allowed actual MSD, the second maximum allowed actual MSD is maximum allowed actual MSD corresponding to the second lower MSD class, and the first object comprises at least one of the following: a second band, a first band combination, a first MSD type, or a first IMD order; and
the third indication information is used for indicating whether to report MSD information based on a first test method, wherein the first test method comprises at least one of the following: an OTA test or a conductive test.

13. The method according to claim 12, wherein the first band is an aggressor band.

14. The method according to claim 12, wherein the bandwidth configuration comprises a victim bandwidth or an aggressor bandwidth of MSD information that needs to be reported;
or
the power class configuration comprises at least one of the following: at least one power class that needs to be reported, reporting MSD information based on a current power class capability or not reporting MSD information based on a current power class capability, or reporting MSD information of all power class capabilities or not reporting MSD information of all power class capabilities.

15. The method according to claim 2, wherein the method further comprises:
sending, by the terminal, second information before the terminal receives the resource configuration or the MSD configuration information, wherein the second information is used for indicating that the terminal supports the target MSD value.

16. The method according to claim 1, wherein the MSD information is carried in a downlink feature set.

17. The method according to claim 2, wherein the first configuration information comprises the terminal capability enquiry, the first reporting manner is reporting the MSD information through the terminal capability information, and the reporting, by the terminal, the MSD information based on first configuration information or a first reporting manner comprises:
reporting, by the terminal, MSD information related to a band comprised in a band list filter.

18. The method according to claim 2, wherein the first reporting manner comprises reporting the MSD information through grouped reporting, and the reporting, by the terminal, the MSD information based on a first reporting manner comprises:
reporting, by the terminal, at least one MSD information group, wherein the MSD information group comprises at least two pieces of MSD information, and the at least two pieces of MSD information have a same target MSD value.

19. The method according to claim 2, wherein the first reporting manner comprises: reporting the MSD information through segmented reporting, and the reporting, by the terminal, the MSD information based on a first reporting manner comprises:
reporting, by the terminal, the MSD information through an uplink dedicated message segmentation message.

20. The method according to claim 2, wherein the first reporting manner comprises: reporting the MSD information through the plurality of times of reporting, and the reporting, by the terminal, the MSD information based on a first reporting manner comprises:

    reporting, by the terminal, first MSD information; and
    reporting, by the terminal, second MSD information, wherein the first MSD information or the second MSD information comprises at least a part of content of the MSD information.

21. A transmission method, comprising:
receiving, by a network side device, MSD information reported by a terminal, wherein the MSD information comprises at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

22. The method according to claim 21, wherein the method further comprises:
sending, by the network side device, first configuration information, wherein the first configuration information comprises at least one of the following: a resource configuration, a defined or configured MSD sequence number, MSD configuration information, or a terminal capability enquiry.

23. The method according to claim 21, wherein the receiving, by a network side device, MSD information reported by a terminal comprises:
receiving, by the network side device, the MSD information sent by the terminal in a first reporting manner, wherein the first reporting manner comprises at least one of the following: reporting the MSD information through grouped reporting, reporting the MSD information through segmented reporting, reporting the MSD information through terminal capability information, or reporting the MSD information through a plurality of times of reporting.

24. The method according to claim 21, wherein the target MSD value comprises at least one of the following: an MSD threshold value, a threshold number at which the MSD is located, and a threshold quantity by which the MSD is reduced.

25. The method according to claim 21, wherein the power class information comprises at least one of the following: a default power class, a power class in which the terminal is located, a highest power class or a lowest power class supported by the terminal, or at least one power class configured by a network.

26. The method according to claim 25, wherein the MSD information does not comprise the power class information or the power class information in the MSD information is defaulted in a first case; and
the first case comprises at least one of the following: the power class information being the default power class, the power class information being the power class in which the terminal is located, the power class information being the highest power class or the lowest power class supported by the terminal, or the network configuring a power class.

27. The method according to claim 21, wherein the band information comprises at least one of the following: a victim band, an aggressor band, or a band combination, wherein the band combination comprises at least one of the victim band or the aggressor band.

28. The method according to claim 21, wherein the bandwidth information comprises at least one of the following: an aggressor uplink bandwidth or BWP, or a victim downlink bandwidth or BWP.

29. The method according to claim 21, wherein the frequency range information comprises at least one of the following: aggressor frequency or bandwidth information, or victim frequency or bandwidth information.

30. The method according to claim 21, wherein in a case that the MSD information does not comprise the bandwidth information, a bandwidth corresponding to the MSD information is a default bandwidth in a band corresponding to the MSD information, or an initial bandwidth, or a maximum bandwidth supported by the terminal in a corresponding band; or the target MSD value comprised in the MSD information is a poorest MSD value in all bandwidths.

31. The method according to claim 21, wherein the RAT information comprises at least one of the following: a RAT type, MR-DC information, or cell group information.

32. The method according to claim 21, wherein the method further comprises:
receiving, by the network side device, second information sent by the terminal, wherein the second information is used for indicating that the terminal supports the target MSD value.

33. The method according to claim 21, wherein the MSD information is carried in a downlink feature set.

34. The method according to claim 21, wherein the network side device is a master node MN, and the receiving, by a network side device, MSD information reported by a terminal comprises: receiving, by the MN, MSD information of a first band combination that is reported by the terminal; and
the method further comprises:

    sending, by the MN, the MSD information of the first band combination to a secondary node SN, wherein the first band combination comprises a combination of a third band and another band, and the third band is a band related to the SN; or
    sending, by the MN, the MSD information of the first band combination to a core network device, wherein the first band combination comprises a combination of a third band and another band, and the third band is a band related to the SN.

35. The method according to claim 34, wherein the sending, by the MN, the MSD information of the first band combination to a secondary node SN comprises: sending, by the MN, the MSD information of the first band combination to the SN when adding the SN.

36. The method according to claim 34, wherein after the sending, by the MN, the MSD information of the first band combination to a core network device, the method further comprises:
obtaining, by the SN, the MSD information of the first band combination from the core network device.

37. The method according to claim 34, wherein
the obtaining, by the SN, the MSD information of the first band combination from the core network device comprises:
obtaining, by the SN, the MSD information of the first band combination from the core network device after the SN receives an SN addition request sent by the MN.

38. A transmission apparatus, comprising:

a first sending module, configured to report MSD information, wherein the MSD information comprises at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

39. A transmission apparatus, comprising:

a first receiving module, configured to receive MSD information reported by a terminal, wherein the MSD information comprises at least one of the following: a first MSD capability, a target MSD value, power class information, band information, bandwidth information, frequency range information, MSD type information, RAT information, or an MSD sequence number, the first MSD capability is used for indicating that the terminal has the target MSD value or a capability for the target MSD value to be lower than an MSD value defined by a protocol, the target MSD value is used for representing MSD that the terminal is capable of supporting or reaching, and the power class information, the band information, the bandwidth information, or the frequency range information is related to the MSD that the terminal is capable of supporting or reaching.

40. A communication device, comprising a processor, a memory, and a program or instructions stored in the memory and executable on the processor, wherein the program or the instructions, when executed by the processor, implement steps of the method according to any one of claims 1 to 37.

41. A readable storage medium, having a program or instructions stored thereon, wherein the program or the instructions, when executed by a processor of a terminal, implement steps of the method according to any one of claims 1 to 37.

fo

2fo

3fo

LTE TX

Frequency

NR RX

Frequency

FIG. 1

f1

f2

f3

LTE TX

LTE RX

NR TX

f1 and f3 enter a nonlinear device at the same time, to generate a new frequency component (f3–f1)

f3–f1

FIG. 2

26

FIG. 3

401

A terminal reports MSD information, where the MSD information includes at least one of the following: a first MSD capability, a target MSD value, power class information, band information, bandwidth information, frequency range information, MSD type information, RAT information, or an MSD sequence number

FIG. 4

501

A network side device receives MSD information reported by a terminal, where the MSD information includes at least one of the following: a first MSD capability, a target MSD value, power class information, band information, bandwidth information, frequency range information, MSD type information, RAT information, or an MSD sequence number

FIG. 5

600

First sending module 601

FIG. 6

700

First receiving module 701

FIG. 7

FIG. 8

900

**Network side device**

Processor
901

Bus interface

Transceiver
902

Memory
903

FIG. 9

1000

**Communication device**

Processor
1001

Memory
1002

FIG. 10

## INTERNATIONAL SEARCH REPORT

International application No.

**PCT/CN2024/091298**

| A. | CLASSIFICATION OF SUBJECT MATTER |
|---|---|

H04W72/53(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, 3GPP, DWPI, ENTXT, ENTXTC: 上报, 报告, 发送, 最大灵敏度回退, 最大灵敏度减损, 最大灵敏度降级, 最大灵敏度劣化, 最大灵敏度退化, 带宽, 频率, 频点, 无线接入, 双连接, report+, sen+, transmi+, MSD, bandwidth, frequency, RAT, DC

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115997400 A (BEIJING XIAOMI MOBILE SOFTWARE CO., LTD.) 21 April 2023 (2023-04-21)<br>description, paragraphs [0084]-[0290], and figures 1-14 | 1-41 |
| X | CN 113678550 A (NOKIA TECHNOLOGIES OY) 19 November 2021 (2021-11-19)<br>description, paragraphs [0085]-[0116], and figures 1-9 | 1-41 |
| X | US 2020236696 A1 (NTT DOCOMO INC.) 23 July 2020 (2020-07-23)<br>description, paragraphs [0020]-[0092], and figures 1-10 | 1-41 |
| A | US 2022224460 A1 (LG ELECTRONICS INC.) 14 July 2022 (2022-07-14)<br>entire document | 1-41 |
| A | CN 112020140 A (RESEARCH INSTITUTE OF CHINA MOBILE COMMUNICATIONS CORP.; CHINA MOBILE COMMUNICATIONS GROUP CO., LTD.) 01 December 2020 (2020-12-01)<br>entire document | 1-41 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **20 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091298**

| Patent document cited in search report | | | Publication date (day/month/year) | Patent family member(s) | | | Publication date (day/month/year) |
|---|---|---|---|---|---|---|---|
| CN | 115997400 | A | 21 April 2023 | None | | | |
| CN | 113678550 | A | 19 November 2021 | US | 2022225080 | A1 | 14 July 2022 |
| | | | | WO | 2020201617 | A1 | 08 October 2020 |
| | | | | AU | 2020250940 | A1 | 30 September 2021 |
| | | | | EP | 3949609 | A1 | 09 February 2022 |
| | | | | EP | 3949609 | A4 | 07 December 2022 |
| US | 2020236696 | A1 | 23 July 2020 | WO | 2019069750 | A1 | 11 April 2019 |
| | | | | JP | 2021016010 | A | 12 February 2021 |
| US | 2022224460 | A1 | 14 July 2022 | KR | 20230069238 | A | 18 May 2023 |
| | | | | WO | 2022154494 | A1 | 21 July 2022 |
| CN | 112020140 | A | 01 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310535558
- CN 202311253806